# EUROPEAN PATENT APPLICATION

(11) **EP 0 993 145 A1**
(43) Date of publication of application: **12.04.2000**
(21) Application number: 99480073.8
(22) Date of filing: 29.07.1999
(51) Int. Cl.: H04L 12/18, H04L 12/24, H04L 29/06

(54) **System for broadcasting alarm messages to selected users of an IP network**

(30) Priority: 08.10.1998 EP 98480066
(71) Applicant: INTERNATIONAL BUSINESS MACHINES CORPORATION, Armonk, NY 10504 (US)
(72) Inventor: Foncarnier, Olivier, 06140 Vence (FR)
(74) Representative: Etorre, Yves Nicolas

(57) **Abstract**

System for broadcasting alarm messages from a server (16) to a list of users among a plurality of multi-platform users (10) sharing the server in a data transmission network (14) operating under Internet Protocol (IP) and using the Java language. The system comprises a profile table (24) containing the profiles of each user, a processing unit (20) and a message sender (28) enabling an administrator associated with the server to transmit alarm messages to the users of the list wherein the users have been selected by selecting profiles in the profile table. The alarm messages are displayed on the screen of the workstation associated with each selected user if this workstation is running.

## Description

### Technical field

The invention relates to the heterogeneous data transmission networks which can be shared by multi-platform users by means of a language tool of the Java type, and particularly to a system for broadcasting alarm messages to selected users of such a network.

### Background

The data transmission network based upon the Internet Protocol (IP) is becoming an universal network used by more ad more people in the world. As the users which are interconnected by such a network are operating on different platforms, there was a need of a language tool for the users to be able to communicate together whatever platform they are using.

The Java language that emerged to meet this need is simple and can be easily programmed by most developers without an extensive programmer training while being attuned to current software practices. The Java language is object oriented to take advantage of modern software development methodologies and to fit into distributed user-server applications. It is also multithreaded for high performance in applications that need to perform multiple concurrent activities such as multimedia.

The Java language is designed to support applications that are deployed into heterogeneous network environments wherein the application must be capable of executing on a variety of hardware architectures. Within this variety of hardware platforms, the applications can execute atop various operating systems (OS/2, Windows 95, Windows NT, Aix, etc.) and interoperate with multiple programming language interfaces.

Nevertheless, despite the powerful performance of the Java language, there is at present no tool enabling information or alarm message to be forwarded from a server and displayed to one or several users operating on different platforms while these users are running our application.

### Summary of the invention

Accordingly, the main object of the invention is to provide a system for broadcasting information and alarm messages to selected users in an heterogeneous data transmission network such as an IP network .

Another object of the invention is to provide an heterogeneous data transmission network such as an IP network wherein at least a server can broadcast information and alarm messages to a list of users defined by their profiles previously stored in a profile table.

Therefore, the invention relates to a system for broadcasting alarm messages from a server to a list of users among a plurality of multi-platform users sharing the server in a data transmission network operating under Internet Protocol (IP) and using the Java language, this system comprising a profile table which contains the profiles of each user, and processing and transmitting means which enable an administrator associated with the server to transmit alarm messages to the users of the list wherein the users have been selected by selecting profiles in the profile table, the alarm messages being displayed on the screen of the workstation associated with each selected user if his workstation is running.

### Detailed description of the invention

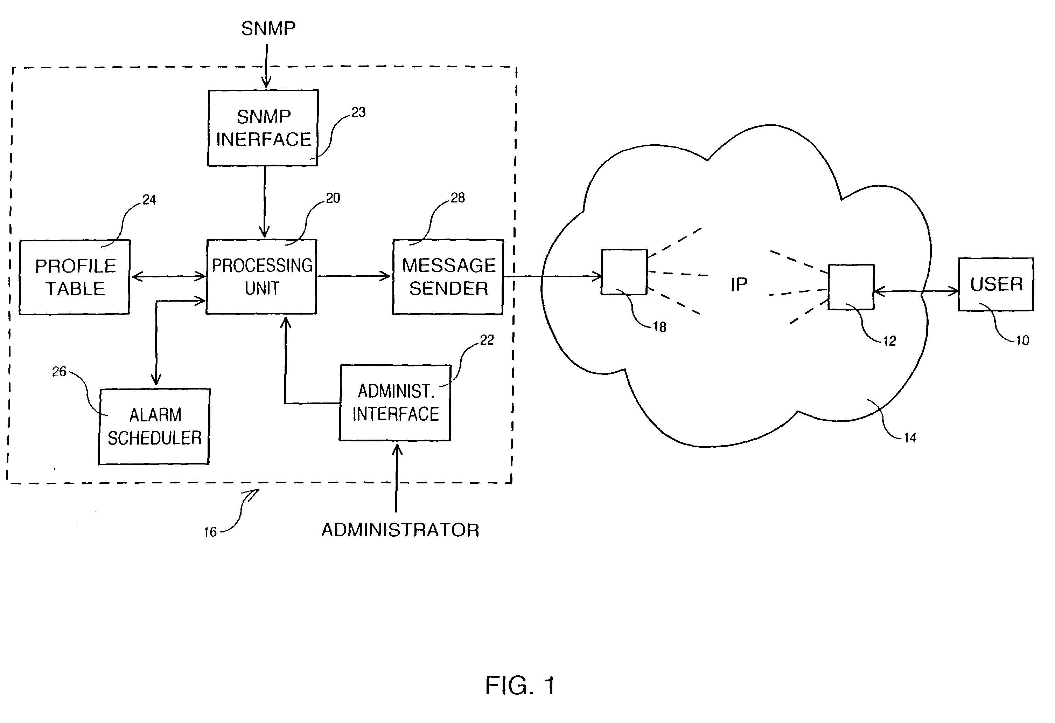

The objects, features and advantages of the invention will become clear from the following description in reference to the accompanying Figure 1 representing schematically a block-diagram of a user connected through an IP network to its server provided with a system for broadcasting messages according to the invention.

As illustrated, a user application 10 is connected to a node 12 of an IP network 14 and can transmit data over the network to any other user application by using a server 16 connected to a node 18 of network 14.

Server 16 includes a processing unit 20 which handles the server and is also used to process all the operations controlled by an administrator entering the server via an administrator interface 22.

Server 16 also comprises a System Network Message Protocol (SNMP), an interface 23 allowing to monitor defined machines, a profile table 24 for the registration of the user profiles, an alarm scheduler 26 and a message sender 28 connected to node 18.

When a user is connected for the first time to the server, he provides data about the team in which he is integrated, his centers of interest, etc. which enable a profile to be constituted. Such a profile is registered in profile table 24 and can be used by the administrator to send messages to the user. Note that the profile can be modified at any time at the request of the user.

By means of a new application written in Java language (Java alarm program) and run by processing unit 20, messages can be sent to any user connected to server 16 such as user 10 whatever the platform he is using, AIX, SUM, OS/2, DOS, Windows 95, etc. The messages can be either manually sent, or automatically sent, or can be standalone alarm functions.

A message or an alarm can be manually sent when the server administrator writes the massage (or alarm) on administrator interface 22 and initiates himself the transmission thereof to a list of users whose profile has been selected in profile table 24. Then, the message is sent by message sender 28 over the network to all running workstations corresponding to the selected profile. On the user workstation, the Java alarm program receives the message (or alarm) and displays it in foreground on the user screen, and an alarm tune is also played. Once the message is read, the user presses the OK key and the program switches in background. Then, the Java alarm program sends backs to server 16 an acknowledgment which can be used for statistic purposes on the server.

Messages can also be generated automatically from server 16. In such a case, a message or an alarm is previously written by the administrator and stored in the memory of processing unit 20. At the same time, the administrator defines the profile of the users to which such a message or an alarm must be sent when a condition or an event occurs. Thus, the message can be used to monitor specific resources via SNMP interface 22, an alert message being sent by message sender 28 when one of those resources comes down or becomes unavailable. Information messages can also be broadcast to a list of users when an event is triggered, such as the message « staff meeting in 10 minutes » sent to all members of a team every Monday at 9.50 am. For this type of alert messages triggered by an event, the transmission of the message is scheduled in alarm scheduler 26 by the administrator.

The standalone alarm functions are used to detect when the server is out. In such a case, a message is scheduled in alarm schedule 26 to be regularly sent to the users.

If the user is no longer available, no message is received by the user who knows that the server is out of work.

The use of standalone alarm functions can be enhanced if the list of events and monitoring servers were downloaded directly into the Java alarm program at the beginning and refreshed once a change is made in the alarm server. An advantage is to determine more precisely the connection problem. For example, if the server is the only server which cannot be contacted, there is a server problem or if all the monitored servers cannot be contacted, there is a network problem and the message will be different.

## Claims

1. System for broadcasting alarm messages from a server (16) to a list of users among a plurality of multi-platform users (10) sharing said server in a data transmission network (14) operating under Internet Protocol (IP) and using the Java language ;
said system being characterized in that it comprises a profile table (24) containing the profiles of each one of said plurality of users, and processing and transmitting means (20, 28) enabling an administrator associated with said server to transmit alarm messages to the users of said list wherein said users have been selected by selecting profiles in said profile table, said alarm messages being displayed on the screen of the workstation associated with each selected user if said workstation is running.

2. System according to claim 1, wherein said processing and transmitting means comprise a processing unit (20) operating under the control of a Java alarm program and a message sender (28) transmitting directly said alarm messages over said network (14).

3. System according to claim 1 or 2, wherein said alarm messages are written and manually sent by the administrator when necessary.

4. System according to claim 1 or 2, wherein alarm messages previously written by the administrator are automatically sent by said processing and transmitting means at the occurrence of a condition or an event.

5. System according to claim 4, wherein said alarm messages are automatically sent when one of specific resources monitored by a System Network Message Protocol (SNMP) via a SNMP interface (22) comes down or becomes unavailable.

6. System according to claim 4, wherein said alarm messages are automatically sent at the occurrence of an event scheduled in an alarm scheduler (26) by said administrator.

7. System according to claim 1 or 2, wherein said alarm messages are standalone alarm functions used to detect when said server (16) is out of work.

8. Server (16) used in a data transmission network (14) operating under Internet Protocol (IP) and using the Java language, said server being shared by a plurality of multi-platform users (10) and running a Java alarm program enabling alarm messages to be sent to a list of users among said plurality of users ;
said server being characterized in that it comprises a profile table (24) containing the profiles of each one of said plurality of users, and processing and transmitting means (20, 28) enabling an administrator associated with said server to transmit alarm messages to the users of said list wherein said users have been selected by selecting profiles in said profile table, said alarm messages being displayed on the screen of the workstation associated with each selected user if said workstation is running.

9. Server according to claim 8, wherein said processing and transmitting means comprise a processing unit (20) operating under the control of a Java alarm program and a message sender (28) transmitting directly said alarm messages over said network (14).

10. Server according to claim 8 or 9, wherein said alarm messages are written and manually sent by the administrator when necessary.

11. Server according to claim 8 or 9, wherein alarm messages previously written by the administrator are automatically sent by said processing and transmitting means at the occurrence of a condition or an event.

12. Server according to claim 11, wherein said alarm messages are automatically sent when one of specific resources monitored by a System Network Message Protocol (SNMP) via a SNMP interface (22) comes down or is unavailable.

13. Server according to claim 11 , wherein said alarm messages are automatically sent at the occurrence of an event scheduled in an alarm scheduler (26) by said administrator.

14. Server according to claim 8 or 9, wherein said alarm messages are standalone alarm functions used to detect when said server (16) is out of work.
